# EUROPÄISCHE PATENTSCHRIFT

(11) **EP 0 718 834 B1**
(45) Veröffentlichungstag und Bekanntmachung des Hinweises auf die Patenterteilung: **17.12.2003**
(21) Anmeldenummer: 95119825.8
(22) Anmeldetag: 15.12.1995
(51) Int. Cl.: G06K 19/16, G11B 7/013, B42D 15/10, G11B 7/00, G11B 7/24

(54) **Optischer Datenträger und Lesegerät für einen solchen Datenträger**
Optical data carrier and reading apparatus for such a data carrier
Support de données optique et appareil de lecture d'un tel support de données

(30) Priorität: 22.12.1994 CH 388394
(43) Veröffentlichungstag der Anmeldung: 26.06.1996
(73) Patentinhaber: OVD Kinegram AG, 6301 Zug (CH)
(72) Erfinder: Tompkin, Wayne R., CH-5400 Ennetbaden (CH); Staub, René, CH-6330 Cham (CH)
(74) Vertreter: LOUIS- PÖHLAU- LOHRENTZ

(56) Entgegenhaltungen:
- EP-A- 0 075 674
- EP-A- 0 215 187
- EP-A- 0 551 753
- EP-A- 0 552 887
- EP-A- 0 613 126
- US-A- 4 211 918
- PATENT ABSTRACTS OF JAPAN vol. 17, no. 358 (M-1440), 2. März 1993 -& JP 05 050788 A (TOPPAN)
- PATENT ABSTRACTS OF JAPAN vol. 010, no. 330 (P-514), 11. November 1986 & JP 61 134946 A (CANON INC), 23. Juni 1986
- Schröder, Gottfried; "Technische Optik"; Vogel-Buchverlag, Würzburg; 1986; ISBN 3-8023-0067-X

## Beschreibung

Die Erfindung betrifft einen optischen Datenträger der im Oberbegriff des Anspruchs 1 genannten Art.

Solche Datenträger eignen sich z. B. zur Speicherung von Text-, Bild- und Toninformation, oder anderen Informationen wie z.B. biometrischen, die als ROM Daten verfügbar sein sollen. Bekannte Datenträger dieser Art sind die CD's (compact discs). Weiter eignen sich solche Datenträger auch zur Verwendung als schwer kopier- oder fälschbare Wertkarten wie z.B. Taxkarten zur Bezahlung von Telefongesprächen in öffentlichen Telefonstationen, bei denen auf beschränktem Raum eine Vielzahl von Informationen zu speichern ist.

Es ist aus der EP 376'673 bekannt, bei einer CD stäbchenförmige Gruben (Pits) entlang den Datenspuren in unterschiedlicher Orientierung anzuordnen, wobei jede Orientierung einer anderen Bitfolge zugeordnet ist. Zum Lesen der Bitfolge sind Photodetektoren vorgesehen, wobei die Zahl der Photodetektoren doppelt so gross wie die Zahl der verschiedenen Orientierungen der Gruben ist. Die im besten Fall vorgesehene Zahl der Photodetektoren ist gleich der Zahl der verschiedenen Orientierungen plus eins.

Ein optischer Datenträger der im Oberbegriff des Anspruchs 1 genannten Art ist aus der EP 613 126 bekannt. Auf dem Datenträger sind mit Beugungsgittern versehene Zellen vorhanden. Jede Zelle ist in eine Anzahl n von Teilflächen unterteilt, wobei jeder Teilfläche ein Beugungsgitter mit unterschiedlichen Parametern wie Linienabstand und/oder Azimut zugeordnet ist. Jede Teilfläche beugt einen auftreffenden Leselichtstrahl in Teilstrahlen verschiedener Richtung, falls sie ein Bit mit dem Wert "1" darstellt, sie beugt kein Licht, falls sie ein Bit mit dem Wert "0" darstellt. Die in einer Zelle gespeicherte Bitfolge wird somit simultan ausgelesen. Da die Teilflächen nebeneinander angeordnet sind, ist die von einer Bitfolge beanspruchte Fläche im Vergleich zu einem ein einziges Bit darstellenden Pit relativ gross.

Die CH 594 935 beschreibt ein Verfahren zur Herstellung eines Dokuments. Ein Informationsträger der im Oberbegriff des Anspruchs 1 genannten Art enthält vor der Umwandlung zum Dokument eine Vielzahl von Speicherzellen mit einer maschinenlesbaren optischen Markierung bestehend aus einer das einfallende Licht modifizierenden Reliefstruktur. Die geometrische Lage der Speicherzelle auf dem Informationsträger stellt eine kodierte Information dar. Bei der Herstellung des Dokuments werden entsprechend der auf dem Informationsträger zu speichernden Information unter Wärmeeinwirkung die Reliefstruktur der Markierung von vorbestimmten Speicherzellen zerstört und derart die Markierung gelöscht. Damit die auf dem Dokument gespeicherte Information nicht verändert werden kann, ist die Information mittels eines Fehlererkennungskodes zu verschlüsseln, beispielsweise mittels den bekannten 2 aus 5 oder 3 aus 7 Kodes, oder mittels zusätzlicher Prüfziffern zu schützen.

Weiter sind thermoplastische Kunststoffe bekannt, die mit mikroskopisch feinen Reliefstrukturen beprägbar sind. Die Reliefstrukturen können durch Zufuhr thermischer Energie lokal und irreversibel verändert werden.

Der Erfindung liegt die Aufgabe zugrunde, einen einfach herstellbaren, optischen Datenträger hoher Speicherdichte vorzuschlagen, der bei Bedarf als WORM (Write Once Read Many times) Speicher dient und eine hohe Sicherheit gegen Fälschungs- oder unerlaubte Manipulationsversuche bietet.

Die Aufgabe wird erfindungsgemäss gelöst durch die Merkmale von Anspruch 1. Vorteilhafte Ausgestaltungen ergeben sich aus den abhängigen Ansprüchen.

Ein erster Gedanke der Erfindung besteht darin, für ein optisches Lesegerät mit einer vorbestimmten Anzahl von n Photodetektoren einen Datenträger vorzusehen, bei dem entlang von Datenspuren mehr oder weniger komplexe Beugungsmuster angeordnet sind. Jedes Beugungsmuster stellt eine Bitfolge von n Bits dar, wobei jedem Bit in der Bitfolge ein bestimmter Photodetektor zugeordnet ist. Zur Darstellung aller möglichen Bitfolgen ist ein Satz von m Beugungsmustern vorgesehen, wobei die Zahl m gegeben ist durch m = 2ⁿ. Beim Lesen des Datenträgers beleuchtet ein Lesestrahl des Lesegerätes ein Beugungsmuster nach dem anderen, wobei jedes Beugungsmuster Licht in diejenigen Photodetektoren beugt, deren Bit den Wert "1" haben soll, während kein Licht in diejenigen Photodetektoren gebeugt wird, deren Bit den Wert "0" haben soll. Die Erfindung benützt dabei insbesondere eine Anordnung von Beugungsgittern mit einem asymmetrischen Profil, so dass das Licht des Lesestrahles vorwiegend in eine einzige oder in mehrere unabhängig voneinander bestimmbare, vorbestimmte Raumrichtungen gebeugt wird. Die Erfindung macht dabei Gebrauch von der Erkenntnis, dass die physikalischen Eigenschaften eines optisch wirksamen Beugungsgitters durch drei Grössen, nämlich den Linienabstand, die Orientierung und das Profil gegeben sind, und nutzt diese Eigenschaften konsequent aus zur Erhöhung der Informationsdichte des Datenträgers.

Gemäss einem zweiten Gedanken der Erfindung enthält das Lesegerät eine Steuer- und Auswerteschaltung, die nicht nur feststellt, in welche Photodetektoren Licht gebeugt wird, sondern die auch die Intensitäten der gebeugten und detektierten Teilstrahlen analysiert. Damit kann die Zahl m der Beugungsmuster, die mit n Photodetektoren lesbar und als Bitfolge darstellbar sind, weiter erhöht werden. Ein solche Bitfolge weist dann notabene mehr als n Bits auf.

Mit einer geeigneten Technologie, die das einmalige Verändern des Beugungsverhaltens einzelner Teile eines Beugungsmusters ermöglicht, kann ein einmal beschreibbarer Datenträger verwirklicht werden. Dabei besteht jedes Beugungsmuster im unbeschriebenen Zustand aus k in einer Fläche nebeneinander angeordneten Beugungsgittern mit einem asymmetrischen Beugungsprofil und stellt eine Bitfolge aus k Bits dar, wobei jedes Bit den Wert "1" hat. Das Beschreiben des Datenträgers erfolgt mit einem Schreibgerät, das durch Zufuhr von Energie diejenigen Beugungsgitter des Bitmusters kontrolliert verändert, die nachher ein Bit "0" darstellen sollen.

Als Anwendungsbeispiele von solchen optischen Datenträgern werden eine CD, die als ROM (Read Only Memory) oder WORM (Write Once Read Many times) ausgeführt sein kann, und ein Datenträger, der die Herstellung eines optisch codierbaren Schlüssels erlaubt, vorgestellt.

Um die Sicherheit gegen Fälschungen und/oder unerlaubte Manipulationsversuche zu erhöhen, wird gemäss der Erfindung weiter vorgeschlagen, dass jede Speicherzelle aus wenigstens einem Beugungselement besteht, das auftreffendes Licht als Teilstrahlen in mehrere Richtungen beugt. Aus den Signalen von im Lesegerät entsprechend angeordneten Photodetektoren lässt sich jedem unveränderten Beugungselement eine Bitfolge zuordnen. Diese Bitfolge stellt ein Sicherheitsmerkmal dar und kann z.B. Informationen wie einen Ländercode oder ein Ablaufdatum, etc. enthalten.

Der Datenträger kann weitere Beugungsstrukturen enthalten, die der Führung des Schreib-/Lesestrahles dienen oder die Adressinformationen, Funktionsinformationen oder Formatinformationen enthalten.

Nachfolgend werden Ausführungsbeispiele der Erfindung anhand der Zeichnung näher erläutert.

Es zeigen:
- Fig. 1: eine Lesegerät für einen Datenträger mit optischen Beugungsmustern,
- Fig. 2: eine Anordnung von Photodetektoren in einem solchen Lesegerät,
- Fig. 3: Beugungsmuster,
- Fig. 4: ein aus Beugungselementen zusammengesetztes Beugungsmuster,
- Fig. 5: eine CD im Querschnitt,
- Fig. 6: einen für einen optisch codierbaren Schlüssel geeigneten Datenträger in der Draufsicht,
- Fig. 7: die Ausbildung eines solchen Datenträgers als Laminat aus Kunststoffolien,
- Fig. 8: einen als WORM Speicher ausgebildeten Datenträger,
- Fig. 9: den mit Addressinformation versehenen WORM Speicher und
- Fig. 10: den mit Spurführungsinformation ausgebildeten WORM Speicher.

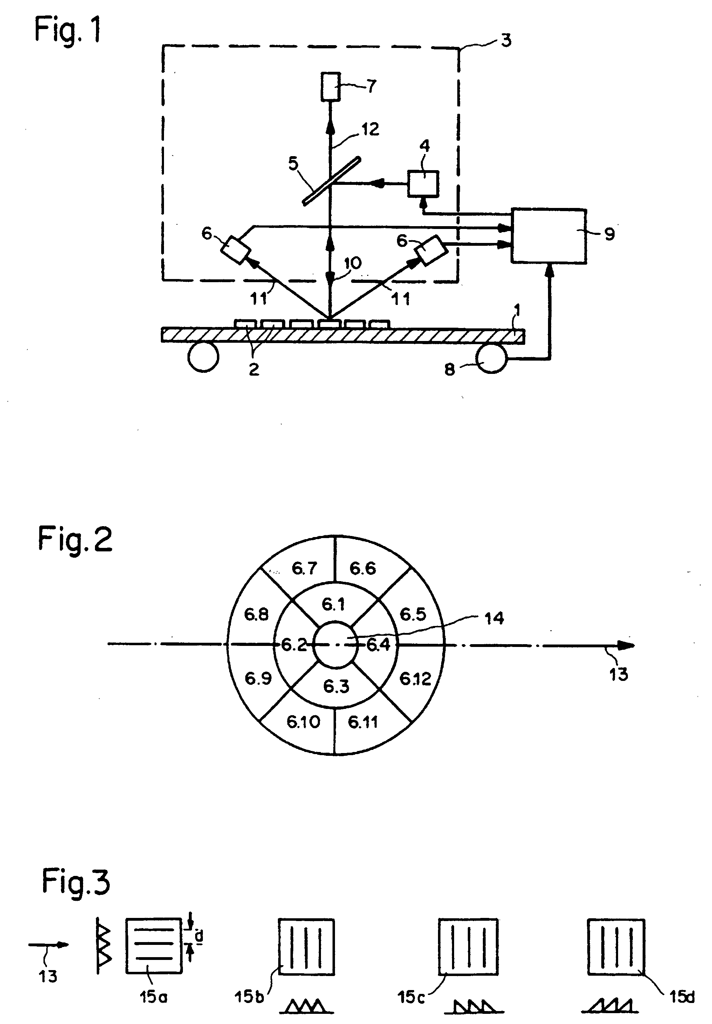

Die Fig. 1 zeigt ein Lesegerät zum Lesen eines Datenträgers 1 mit optisch wirksamen Beugungsmustern 2, wobei jedes Beugungsmuster 2 eine Bitfolge mit n Bits darstellt. Die Beugungsmuster 2 sind entlang wenigstens einer Daten- oder Informationsspur angeordnet. Das Lesegerät weist einen Lesekopf 3 mit einer Lichtquelle 4, einem Strahlteiler 5 und Photodetektoren 6,7, eine Transporteinrichtung 8 und eine Steuer- und Auswerteschaltung 9 auf. Die Lichtquelle 4 dient zum Lesen der durch ein Beugungsmuster 2 dargestellten Bitfolge mittels eines Lichtstrahles 10, der in definierter, z.B. senkrechter, Einfallsrichtung auf das Beugungsmuster 2 fällt und als Teilstrahlen 11, 12 in vorbestimmte Ausfallrichtungen gebeugt wird. Die Zahl der möglichen Ausfallrichtungen ist gleich der Zahl n der Bits in der Bitfolge. Jeder Ausfallrichtung ist einer der Photodetektoren 6 und jedem Photodetektor 6 ist ein vorbestimmtes Bit in der Bitfolge zugeordnet. Der Wert jedes Bits bestimmt sich aufgrund der Intensität des in die zugeordnete Ausfallrichtung gebeugten Teilstrahls 11. Der Photodetektor 7 ist vorgesehen zur Messung der Intensität des der nullten Beugungsordnung entsprechenden, reflektierten Teilstrahles 12, was dank der Verwendung des Strahlteilers 5 möglich ist. Die Transporteinrichtung 8 dient der relativen Bewegung zwischen dem Datenträger 1 und dem Lesekopf 3, so dass jedes Beugungsmuster 2 einzeln lesbar ist. Nicht dargestellt sind optische Abbildungselemente wie Blenden oder Objektivsysteme, die der optimalen Strahlführung dienen. Das vorgeschlagene Lesegerät ist zum Lesen eines Datenträgers 1 in Reflexion vorgesehen. Gleichermassen möglich ist eine Ausführung, bei der das von den Beugungsmustern 2 transmittierte und gebeugte Licht gemessen wird. Als Lichtquelle 4 dient vorzugsweise eine Halbleiterleuchtdiode, deren Licht mehr oder weniger monochromatisch ist, so dass die Divergenz der Teilstrahlen 11 möglichst gering ist.

Die Ausbildung von Datenspuren auf einer CD-ROM und Lesegeräte zum Lesen der Daten sind bekannt. Die Anordnung einer oder mehrerer Informationsspuren auf einem Guthabenmittel, das unter anderem als Wertkarte verwendbar ist, ist bekannt aus der CH-PS 574'144. Die Anordnung solcher Daten- oder Informationsspuren auf einem Datenträger 1 und auch der detaillierte geometrische Aufbau eines Lesegerätes zum optischen Auslesen der auf einem solchen Datenträger 1 gespeicherten Information werden deshalb nicht näher erläutert.

Die Fig. 2 zeigt eine mögliche Anordnung von zwölf Photodetektoren 6.1 bis 6.12 in einer zum Lichtstrahl 10 (Fig. 1) senkrechten Ebene, wobei jeder der Photodetektoren 6.1 bis 6.12 einer begrenzten Teilfläche dieser Ebene zugeordnet ist und somit einen vorbestimmten Raumwinkel abdeckt. Vier Photodetektoren 6.1 bis 6.4 sind auf einem inneren Kreisring, acht Photodetektoren 6.5 bis 6.12 sind auf einem äusseren Kreisring angeordnet. Die Orientierung der Photodetektoren 6.1 bis 6.12 bezüglich der Datenspur des Datenträgers 1 ist ersichtlich anhand des Pfeiles 13, der die Richtung der Datenspur angibt. Innerhalb der Kreisringe ist ein Loch 14 vorgesehen, durch welches der Lichtstrahl 10 auf das Beugungsmuster 2 fällt. Zur Messung des direkt reflektierten Teilstrahles 12 kann ein weiterer Photodetektor 7, wie in der Fig. 1 gezeigt, oberhalb des Strahlteilers 5 vorgesehen sein. Dieser Photodetektor 7 kann z.B. als CCD (charge coupled device) oder als Quadrantendetektor ausgebildet und Teil einer Fokussiereinrichtung sein.

Die zwölf Photodetektoren 6.1 bis 6.12 dienen zum Lesen einer aus zwölf binären Zeichen gebildeten Bitfolge, die durch das Beugungsmuster 2 dargestellt ist. Es ist deshalb ein Satz von 2¹² = 4096 verschiedenen Beugungsmustern 2 vorgesehen, die sich in der Art der Beugung des auf sie fallenden Lichtstrahles 10 unterscheiden. Der Begriff "verschieden" bedeutet hier, dass zwei in Profil und Linienabstand identische Beugungsmuster 2, die sich nur hinsichtlich ihrer Orientierung bezüglich der Datenspur unterscheiden, als zwei Beugungsmuster 2 zu betrachten sind. Das Beugungsmuster 2, das die Bitfolge "000000000101" darstellt, beugt den Lichtstrahl 10 in zwei Teilstrahlen 11, von denen der erste Teilstrahl 11 auf den Photodetektor 6.1, der zweite Teilstrahl 11 auf den Photodetektor 6.3 trifft. Das Beugungsmuster 2, das die Bitfolge "001000000101" darstellt, beugt den Lichtstrahl 10 in drei Teilstrahlen 11, die die Photodetektoren 6.1, 6.3 und 6.10 beleuchten. Jedem Bit der Bitfolge ist eine Ausfallrichtung und jeder Ausfallrichtung einer der Photodetektoren 6.1 bis 6.12 zugeordnet. Die Ausfallrichtungen sind durch die Einfallsrichtung des Lichtstrahles 10 bezüglich des Beugungsmusters 2, die physikalischen Parameter des Beugungsmusters 2 und die Wellenlänge bzw. den Spektralbereich der Lichtquelle 4 vorbestimmt und für den ganzen Satz der 2ⁿ Beugungsmuster 2 gleich. Die Zahl der Ausfallrichtungen ist gleich der Zahl der Photodetektoren 6.1 bis 6.12 und damit auch gleich der Zahl n der Bits der Bitfolgen.

Die Fig. 3 zeigt Profil und Orientierung bezüglich der Datenspur von vier Beugungselementen 15a, 15b, 15c und 15d. Die Beugungselemente 15a, 15b, 15c und 15d sind ausgewählte Beispiele eines Satzes von 16 Beugungsmustern 2, die wegen der Gleichung 2⁴ = 16 geeignet sind zur Darstellung von Bitfolgen mit vier Bits und somit die Zahlen 0 bis 15 oder 1 bis 16 oder beliebige Zeichen aus einem Satz von 16 Zeichen repräsentieren können. Zu ihrer Auslesung ist ein Lesegerät vorgesehen, das nur die vier auf dem inneren Kreisring angeordneten Photodetektoren 6.1 bis 6.4 (Fig. 2) enthält. Das erste Beugungselement 15a ist ein Phasenbeugungsgitter mit einem symmetrischen Profil, so dass senkrecht einfallendes, monochromatisches Licht gleichmässig in die plus erste und in die minus erste Beugungsordnung gebeugt wird. Die Gitterlinien sind parallel zu der durch die Datenspur definierten Richtung angeordnet und der Gitterabstand d ist so auf die Wellenlänge λ bzw. den Spektralbereich Λ des Lichtstrahles 10 (Fig. 1) abgestimmt, dass das in die plus erste Beugungsordnung gebeugte Licht als erster Teilstrahl 11 auf den Photodetektor 6.1, das in die minus erste Beugungsordnung gebeugte Licht als zweiter Teilstrahl 11 auf den Photodetektor 6.3 fällt. Dank der aus der Fig. 2 ersichtlichen Orientierung der Photodetektoren 6.1 bis 6.4 bezüglich der Datenspur fällt kein Licht auf die übrigen Photodetektoren. Die beiden Photodetektoren 6.1 und 6.3 liefern ein Signal S₁ bzw. S₃ mit einem vergleichsweise hohen Spannungspegel, da deren Stärken proportional zur Intensität der auf sie fallenden Teilstrahlen 11 sind, während die Photodetektoren 6.2 und 6.4 Signale S₂ bzw. S₄ mit einem tiefen Spannungspegel abgeben, die als Dunkelsignal interpretierbar sind. Die Steuer- und Auswerteschaltung 9 analysiert die Signale S₁ bis S₄ in dem Sinne, dass einem Signal mit einem tiefen Spannungspegel ein Bit mit dem Wert "0", einem Signal mit einem über einem vorbestimmten Schwellwert liegenden Pegel ein Bit mit dem Wert "1" zugeordnet wird. Aus dem Signal jedes der Photodetektoren 6.1 bis 6.4 ist somit ein Bit bestimmbar, wobei der Platz des Bits in der Bitfolge aufgrund der Nummer des zugehörigen Photodetektors fest so vorbestimmt ist, dass das erste Beugungselement 15a als Bitfolge "0101" bzw. als Zahl "5" interpretiert wird. Das zweite Beugungselement 15b ist identisch mit dem ersten Beugungselement 15a mit der Ausnahme, dass die Gitterlinien senkrecht zur Richtung der Datenspur ausgerichtet sind. Das Licht der plus ersten Beugungsordnung fällt somit auf den Photodetektor 6.2, das Licht der minus ersten Beugungsordnung auf den Photodetektor 6.4. Das zweite Beugungselement 15b stellt somit die Bitfolge "1010" bzw. die Zahl "10" dar.

Ein optisches Phasenbeugungsgitter mit einem asymmetrischen Profil beugt mehr Licht beispielsweise in die plus erste als in die minus erste Beugungsordnung. Bei einem Gitter mit einem sägezahnförmigen Profil kann das Verhältnis der Intensitäten der plus ersten zur minus ersten Beugungsordnung in einem grossen Bereich variieren und beispielsweise 8: 1 betragen. Mit einem derartigen Gitter und dessen Ausrichtung parallel oder senkrecht zur Datenspur lassen sich somit vier weitere Beugungselemente 15 realisieren, welche zur Darstellung der Bitfolgen "0001", "0010", "0100" und "1000" geeignet sind. Die Fig. 3 zeigt neben den zwei Beugungselementen 15a und 15b mit einem dreieckförmigen, symmetrischen Profil zwei Beugungselemente 15c und 15d mit einem sägezahnförmigen, asymmetrischen Profil. Die Photodetektoren 6.1 bis 6.4 liefern bei den symmetrischen Beugungselementen 15a und 15b Signale S₁ bis S₄ mit zwei unterschiedlich grossen Pegeln P₁ und P₂, bei den asymmetrischen Beugungselementen 15c und 15d Signale S₁ bis S₄ mit drei verschieden grossen Pegeln P₁, P₃ und P₄. Falls das Profil der dreieckförmigen Beugungsgitter 15a und 15b und das Profil der sägezahnförmigen Beugungsgitter 15c und 15d optimal aufeinander abgestimmt sind, so dass die Bedingung P₁, P₃ << P₂, P₄ erfüllt ist, genügt es, einen einzigen Schwellwert so festzulegen, dass die Steuer- und Auswerteschaltung 9 einem Signal mit einem Pegel unterhalb des Schwellwertes ein Bit "0", einem Signal mit einem Pegel oberhalb des Schwellwertes ein Bit "1" zuordnen kann. Die Sicherheit der Zuordnung der richtigen Bitfolge zu einem Beugungselement 15 kann erhöht werden, wenn die Steuer- und Auswerteschaltung 9 einen Test durchführt, ob bei zwei einander diametral gegenüberliegenden Photodetektoren 6 das Signal des ersten Photodetektors 6 um einen vorbestimmten Faktor grösser oder kleiner als das Signal des zweiten Photodetektors 6 ist, oder ob die beiden Signale innerhalb vorgegebener Toleranzwerte gleich sind. Dank dieser Prüfung sind Beugungsgitter 15 mit symmetrischen bzw. asymmetrischen Profilen zuverlässig unterscheidbar und den Beugungselementen 15b bis 15d der Fig. 3 kann die entsprechende Bitfolge "0101", "0001" bzw. "0100" eindeutig zugeordnet werden.

Mit asymmetrischen Gittern, deren Gitterlinien bezüglich der Datenspur um einen Winkel von 45°, -45°, 135° bzw. -135° gedreht sind, lassen sich Beugungselemente 15 realisieren, die die Bitfolgen "1001", "1100", "0110" und "0011" darstellen.

Die Bitfolge "0000" lässt sich durch eine den Lichtstrahl 10 nicht beugende Fläche realisieren, so dass jeder der Photodetektoren 6.1 bis 6.4 ein Bit "0" erzeugt, die Bitfolge "1111" durch eine beispielsweise diffus reflektierende Streufläche, die die vier Photodetektoren 6.1 bis 6.4 gleichmässig und so stark beleuchtet, dass jeder der Photodetektoren 6.1 bis 6.4 ein Bit "1" erzeugt.

Zur Darstellung der Bitfolgen "1110", "1101", "1011" und "0111" sind zweidimensionale Gitterstrukturen geeignet, die sich durch die Überlagerung eines Gitters mit einem symmetrischen Profil und eines Gitters mit einem asymmetrischen Profil ergeben, wobei die Gitterlinien des einen Gitters parallel zur Datenspur, die Gitterlinien des anderen Gitters senkrecht zur Datenspur ausgerichtet sind.

Es sind somit alle Bitfolgen von "0000" bis "1111" durch m=16 Beugungsmuster 2 darstellbar, die mit n=4 Photodetektoren 6.1 bis 6.4 lesbar sind. Es gilt also m=2ⁿ. Diese Bitfolgen können jedoch auch mit anderen als den vorgängig beschriebenen Beugungsgittern realisiert werden. Das Auffinden von Beugungsmustern 2, die einfallendes Licht in verschiedene Teilstrahlen vorbestimmter Raumrichtung beugen sollen, gehört in das Gebiet der inversen Streuproblematik (inverse scattering problem).

Falls die Photodetektoren 6, die in der Fig. 2 einander diametral gegenüberliegen, gegeneinander versetzt angeordnet sind, so dass sie sich nicht mehr diagonal gegenüberliegen, ist auch die Verwendung von Gittern mit symmetrischen Profilen zur Darstellung aller Bitfolgen geeignet. In diesem Fall sind zwischen den Photodetektoren 6 Lücken vorzusehen, so dass der erste von einem Gitter mit einem symmetrischen Profil gebeugte Teilstrahl 11, der der plus ersten Beugungsordnung entspricht, auf einen Photodetektor 6 fällt, während der zweite Teilstrahl 11, der der minus ersten Beugungsordnung entspricht, auf eine Lücke fällt und kein Signal erzeugt. Die Zahl der Photodetektoren, die auf einem Kreisring angeordnet werden können, hängt ab von den Dimensionen des Lesegerätes und der Fähigkeit der vorgesehenen Beugungsmuster 2, den Leselichtstrahl 10 in räumlich genügend getrennte Teilstrahlen 11 aufzuspalten.

Die Gitterkonstante d eines als Gitter beschreibbaren Beugungselementes 15 ist mit Vorteil so klein gewählt, dass aufgrund der elementaren Beziehung d*sinθₕ = h*λ, wobei θₕ den Beugungswinkel der h-ten Beugungsordnung, λ die Wellenlänge des monochromatischen Lichtstrahles 10 und h eine ganze Zahl bedeuten, gilt d < 2*λ, so dass das Licht des Lichtstrahles 10 nur in die plus und minus erste Beugungsordnung gebeugt wird. Bei einer bevorzugten Wellenlänge λ von 780 nm, wie sie handelsübliche, kostengünstige Laserdioden aufweisen, ergibt sich ein maximaler Gitterabstand von dₘₐₓ = 1.56 µm, d.h. eine Linienzahl von mehr als 640 Linien/mm.

Bei einer Erweiterung der Anzahl Photodetektoren 6 auf zwölf, die wie in der Fig. 2 dargestellt angeordnet sind, ist die Gitterkonstante d der Beugungsgitter, die das Licht des Lichtstrahles 10 in die Photodetektoren 6.5 bis 6.12 auf dem äusseren Kreisring beugen sollen, so klein zu wählen, dass ein entsprechend grosser Beugungswinkel resultiert, so dass im wesentlichen kein Licht in die Photodetektoren 6.1 bis 6.4 auf dem inneren Kreisring gebeugt wird.

Ein als Gitter realisiertes Beugungselement 15 benötigt wenigstens fünf bis zehn Gitterlinien und beansprucht somit eine Fläche der Grössenordnung 5µm*5µm bis 10µm*10µm, so dass sich bei der Verwendung von zwölf Photodetektoren eine Bitdichte der Grössenordnung 10⁷ bis 10⁸ Bits/cm² ergibt.

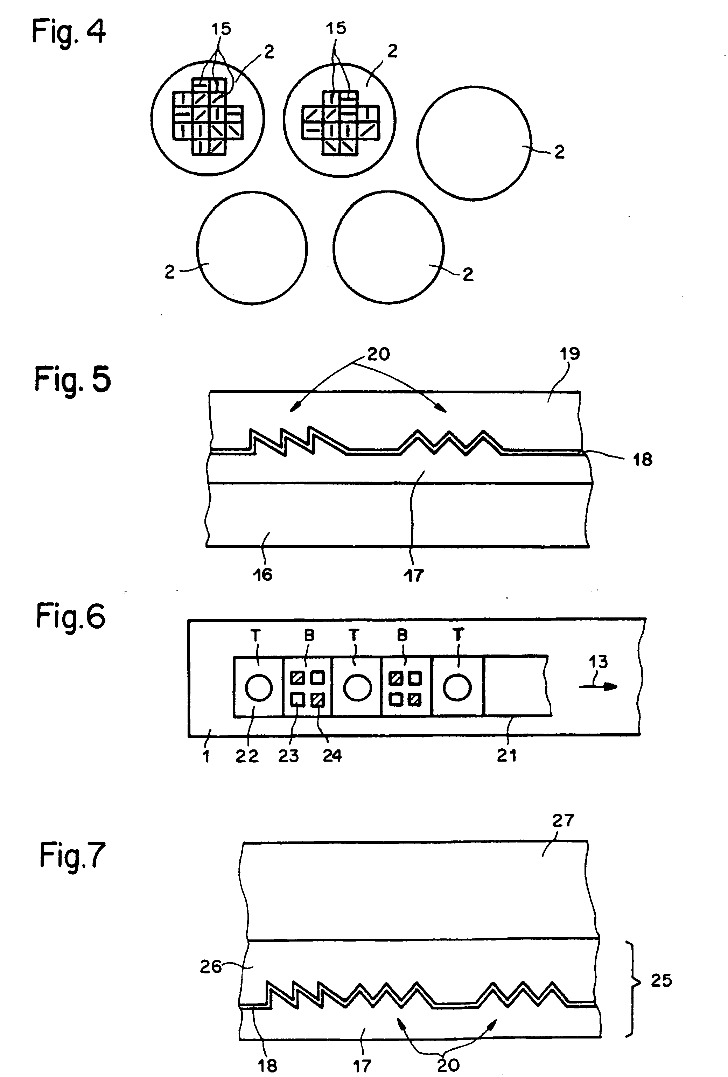

Noch höhere Bitdichten lassen sich erzielen, wenn die Zahl n der Photodetektoren 6 z.B. um 16 erweitert, d.h. auf 28 erhöht wird. Zur Realisierung von 2²⁸ = 268435456 Bitfolgen genügt eine Fläche von 100 µm² kaum mehr und die Bestimmung von 2²⁸ verschiedenen Beugungsmustern 2 wird wirtschaftlich uninteressant, wenn nicht beinahe unmöglich. Es ist in einem solchen Fall zweckmässig, eine Anzahl p charakteristischer Beugungselemente 15, wie in der Fig. 4 dargestellt, matrixartig zu einem Beugungsmuster 2 nebeneinander anzuordnen, wobei jedes Beugungselement 15 einen der p zu beleuchtenden Photodetektoren 6 beleuchtet, deren Signal ein Bit "1" ergeben soll. Für die Photodetektoren 6, die ein Signal entsprechend dem Bit "0" abgeben sollen, ist kein Beugungselement 15 vorzusehen. Somit weist jedes Beugungsmuster 2, das eine Bitfolge mit beispielsweise drei Einsen darstellen soll, nur p=3 Beugungselemente 15 auf. Als Beugungselement 15 ist ein Gitter mit einem asymmetrischen Profil bevorzugt. Falls jedoch zwei diametral gegenüberliegende Photodetektoren 6 gleichzeitig ein Bit "1" messen sollen, kann ein Beugungselement 15 mit einem Gitter mit einem symmetrischen Profil anstelle von zwei Beugungselementen 15 mit Gittern mit einem asymmetrischen Profil verwendet werden. Die Gitterorientierung ist in der Fig. 4 innerhalb des Beugungselementes 15 durch eine einzige Gitterlinie angedeutet. Die zur Darstellung einer Bitfolge mit n binären Ziffern benötigte Fläche beläuft sich demnach höchstens auf das n-fache der Fläche von 25µm² bis 100µm² eines Beugungselementes 15. Auf diese technologisch einfache Weise können Bitdichten von 10⁸/cm² erreicht werden, wobei jedes einer einzelnen Bitfolge zugeordnete Beugungsmuster 2 durch eine einfache matrixartige Anordnung von Beugungselementen 15 realisiert werden kann. Die Anordnung der Beugungselemente 15 innerhalb eines einzelnen Beugungsmusters 2 erfolgt mit Vorteil auf einer kreisförmigen Fläche. Der Durchmesser des Lichtstrahles 10 ist auf den Durchmesser dieser Fläche abgestimmt. Die Beugungsmuster 2 weisen einen gegenseitigen Abstand auf, der ein Übersprechen verhindert. Um eine möglichst grosse Bitdichte zu erhalten, sind die Datenspuren so vorgesehen, dass die kreisförmigen Beugungsmuster 2 möglichst dicht gepackt sind. Mittels eines Computerprogrammes ist es möglich, die bei einer vorgesehenen Anordnung auf die verschiedenen Photodetektoren 6 fallenden Lichtintensitäten zu berechnen und gegebenenfalls durch Verwendung geeigneter Beugungselemente 15 zu optimieren.

Die Zahl m verschiedener Beugungsmuster 2 ist gleich der n-ten Potenz der Zahl zwei: m = 2ⁿ, wobei n die Anzahl der im Lesegerät vorhandenen Photodetektoren bezeichnet. Dabei ist gegebenenfalls der Photodetektor 7 (Fig. 1) nicht mitzählt, der zur Messung der Intensität des nicht gebeugten Teilstrahles 12 (nullte Beugungsordnung) dient. Bei geeigneter Abstimmung der die einzelnen Bits der Bitfolge erzeugenden Beugungselemente 15 zu einem Beugungsmuster 2 hat die Steuer- und Auswerteschaltung 9 einzig die Aufgabe, die von den Photodetektoren 6 gelieferten Signale auf tiefen bzw. hohen Spannungspegel zu überprüfen. Die Informationsdichte kann jedoch weiter erhöht werden, wenn die Steuer- und Auswerteschaltung 9 eingerichtet ist, weitere Analysen der von den Photodetektoren 6 abgegebenen Signale vorzunehmen.

Insbesondere die Verwendung von Beugungsstrukturen, die bei Bestrahlung mit dem Lichtstrahl 10 Teilstrahlen 11 mit unterschiedlich grossen Intensitäten erzeugen, erlaubt eine weitere Erhöhung der Anzahl verschiedener Beugungsmuster 2, die mit einer vorbestimmten Anzahl von Photodetektoren 6 als Bitfolge interpretierbar sind. Das folgende Beispiel geht davon aus, dass das Lesegerät vier auf einem Kreisring angeordnete Photodetektoren enthält, wie z.B. die in der Fig. 2 gezeigten Photodetektoren 6.1 bis 6.4. Der Datenträger 1 enthält entlang den Datenspuren Beugungsmuster 2, die aus Beugungselementen 15 gebildet sind, welche wie in der Fig. 4 gezeigt, nebeneinander angeordnet sind. Dabei ist es vorgesehen, dass jedem der Photodetektoren 6.1 bis 6.4 gegebenenfalls wenigstens zwei Beugungselemente 15 zugeordnet werden können, die als Beugungsgitter mit einem sägezahnförmigen Profil realisiert sind, wobei das Verhältnis der Intensitäten der plus ersten zur minus ersten Beugungsordnung beim ersten Gitter 4:1 und beim zweiten Gitter 8:1 beträgt. Obwohl nur vier Photodetektoren vorhanden sind, können Beugungsmuster 2 gelesen werden, die Bitfolgen mit acht Bits darstellen: Ist im Beugungsmuster 2 für den Photodetektor 6.1 nur das erste Gitter vorhanden, dann liefert der Photodetektor 6.1 ein Signal mit der Stärke R₁. Ist nur das zweite Gitter vorhanden, dann liefert der Photodetektor 6.1 ein Signal mit der Stärke R₂, wobei R₂ ≅ 2*R₁ ist. Sind beide Beugungsgitter vorhanden, dann liefert der Photodetektor 6.1 ein Signal mit der Stärke R₃, wobei R₃ = R₂ + R₁ ≅ 3∗R₁ ist. Die Stärke des auf den Photodetektor 6.3 fallenden Teilstrahles, der von der Beugung in die minus erste Beugungsordnung stammt, beträgt im letzten und schlechtesten Falle R₄ ≅ ½*R₁. Mittels einer Analyse der Signalstärke durch die Steuer- und Auswerteschaltung 9 sind die drei Fälle eindeutig unterscheidbar und es können den entsprechenden Beugungsmustern 2 die Bitfolgen "#0#0#0#1", "#0#1#0#0" bzw. "#0#1#0#1" zugeordnet werden. Dem Photodetektor 6.1 sind dabei das erste und das fünfte Bit von rechts, dem Photodetektor 6.2 das zweite und das sechste Bit von rechts etc. zugeordnet. Das Zeichen "#" ist Platzhalter für je ein Bit, dessen Wert davon abhängt, ob und wie stark die anderen Photodetektoren 6.2 und 6.4 beleuchtet sind. Um nun z.B. auch die Bitfolgen "#0#0#1#1" und "#1#1#1#" erzeugen zu können, sind zwei symmetrische Beugungsgitter mit einer symmetrischen Profilform nötig, die die Photodetektoren 6.1 und 6.3 jeweils mit einem Teilstrahl 11 gleicher Intensität beleuchten, wobei die Intensitäten im ersten Fall etwa den Wert R₁, im zweiten Fall etwa den Wert R₂ annehmen müssen. Jedem der Photodetektoren 6.1 bis 6.4 sind somit zwei Bits der Bitfolge zugeordnet, wobei deren Platz in der Bitfolge vorbestimmt ist. Es ist möglich, bei der Analyse der Signale nicht die absoluten Intensitäten der Teilstrahlen 11 zu berücksichtigen, sondern die Intensitäten, die bezogen sind auf die Intensität der nullten Beugungsordnung oder auf die Summe der auf die Photodetektoren 6 gebeugten Lichtintensitäten. Bei diesem Ausführungsbeispiel ist also die Zahl k der Ausfallrichtungen bzw. der zugeordneten Photodetektoren 6 um einen Faktor zwei kleiner als die Zahl n der Bits der Bitfolge.

Ein einmal beschreibbarer Datenträger 1 ist auf einfache Weise realisierbar, indem eine Vielzahl identischer Beugungsmuster 2 entlang einer oder mehrerer Datenspuren in einen Datenträger 1 aus thermoplastischem Werkstoff geprägt werden, wobei jedes Beugungsmuster 2 aus n matrixartig nebeneinander angeordneten Beugungselementen 15 besteht, so dass jedes Beugungsmuster 2 eine Bitfolge mit n Einsen darstellt. Das Schreiben einer beliebigen Bitfolge erfolgt durch Verändern derjenigen Beugungselemente 15, die nach dem Schreiben in dem zugehörigen Photodetektor eines Lesegerätes ein Bit "0" erzeugen sollen. Diese Veränderung kann in einer Schreibeinrichtung beispielsweise durch Zufuhr thermischer oder mechanischer Energie vorgenommen werden.

Die Fig. 5 zeigt den Querschnitt einer CD, die als ROM oder WORM Datenträger 1 dient. Die CD weist ein scheibenförmiges Substrat 16 auf, das entweder aus thermoplastischem Material besteht oder mit einer thermoplastischen Lackschicht 17 bedeckt ist. Auf das Substrat 16 bzw. die Lackschicht 17 sind aufeinanderfolgend eine Reflexionsschicht 18 und eine Deckschicht 19 aufgebracht. In die Lackschicht 17 und die Reflexionsschicht 18 sind Reliefstrukturen 20 beispielsweise durch Prägen oder Giessen eingeformt. Die Reliefstrukturen 20 stellen phasenbeugende Beugungsmuster 2 (Fig. 4) dar, die aus nebeneinander angeordneten Beugungselementen 15 gebildet sind. Die Deckschicht 19 ist ein thermisch stabiler und vorteilhaft mit ultraviolettem Licht härtbarer Lack, dessen Erweichungspunkt etwa 20°C höher liegt als der Erweichungspunkt der Lackschicht 17. Damit wird erreicht, dass das Beugungsverhalten einzelner Beugungsmuster 2 durch Zufuhr thermischer Energie mittels eines Löschkopfes, wie er beispielsweise in der Schweizer Patentschrift CH 640'075 beschrieben ist, veränderbar ist, ohne dass die dem Löschkopf zugewandte Seite des Datenträgers 1 zum Verkleben mit dem Löschkopf neigt. Die Schweizer Patentschrift CH 604' 146 beschreibt, wie sich unter lokaler Wärmeeinwirkung ein in eine Kunststoffoberfläche eingeprägtes, optisch wirksames Reliefmuster 20 an der erwärmten Stelle so verändert, dass sich wieder die Struktur ausbildet, die die Kunststoffoberfläche vor dem Prägen aufwies. Ein Datenträger 1 mit nach dem Prägen identisch ausgebildeten Beugungsmustern 2 ist durch das Verändern einzelner Beugungselemente 15 mit Daten beschreibbar. Eine weiteres bekanntes Verfahren zur einfachen Beschreibung besteht in der Verwendung eines geführten Laserstrahles zum lokalen Abtragen der Reflexionsschicht 18 bei den je nach darzustellender Bitfolge vorgesehenen Beugungselementen 15, so dass kein Licht oder vergleichsweise wenig Licht in die Photodetektoren reflektiert wird, die ein Bit "0" erzeugen sollen.

Die Fig. 6 zeigt einen optischen Datenträger 1 mit einer einzigen Datenspur 21 mit in Spurrichtung 13 in abwechselnder Reihenfolge angeordneten Takt- und Informationsbereichen T bzw. B. In jedem Taktbereich T ist ein berandetes Feld 22 mit einem Beugungsgitter mit einem symmetrischen Profil, wie z.B. das in der Fig. 3 gezeigte Beugungsgitter 15b, vorhanden. In jedem Informationsbereich B ist wenigstens ein berandetes Feld 23 mit einem Beugungsgitter mit einem asymmetrischen Profil einer ersten Art, wie z.B. das in der Fig. 3 gezeigte Beugungsgitter 15c, und wenigstens ein berandetes Feld 24 mit einem Beugungsgitter mit einem asymmetrischen Profil einer zweiten Art, wie z.B. das in der Fig. 3 gezeigte Beugungsgitter 15d, vorhanden. In dieser Form stellen die Informationsbereiche B noch keine lesbare Information dar. Das Beschreiben eines solchen Datenträgers 1 mit Information erfolgt dadurch, dass in jedem Informationsbereich B entweder alle Felder 23 oder alle Felder 24 so verändert werden, dass sie den Lichtstrahl 10 eines Lesekopfes 3 (Fig. 1) nicht mehr in die Photodetektoren 6 beugen. Linienabstand und Orientierung der Beugungsgitter sind bevorzugt gleich gewählt, so dass beim Lesen ein Informationsbereich B mit Feldern 23 mehr Licht des Lichtstrahles 10 in den ersten. Photodetektor 6 beugt, ein Informationsbereich B mit Feldern 24 mehr Licht des Lichtstrahles 10 in den zweiten Photodetektor 6. Ein Taktbereich T beugt in beide Photodetektoren 6 etwa gleichviel Licht des Lichtstrahles 10. Die Steuer- und Auswerteschaltung 9 bestimmt analog der vorgängig bereits beschriebenen Weise für jeden Informationsbereich B aufgrund der Lichtintensitäten, ob ihm ein Bit "0" oder ein Bit "1" zuzuordnen ist. Die Taktbereiche T stellen sicher, dass im Datenträger 1 aufeinanderfolgende Bits gleicher Art einwandfrei lesbar sind. Ein solcher Datenträger 1 ist mittels eines mit nur zwei Photodetektoren 6 versehenen Lesegerätes lesbar. Weiter ist ein solcher Datenträger 1 kaum fälschbar, da die die Nutzinformation darstellenden Bits nur durch eine Veränderung entweder aller Felder 23 oder aller Felder 24 erzeugbar sind. Jede andere Veränderung führt zu einem nicht mehr lesbaren Zeichen. Da jedes einzelne Bit zudem die schwer fälschbare physikalische Eigenschaft aufweist, dass die Intensität der beiden gebeugten Teilstrahlen einem vorbestimmten Verhältnis entsprechen muss, ergibt sich insgesamt eine sehr hohe Sicherheit gegen Fälschungen, falls das Lesegerät eingerichtet ist, eine derartige Echtheitsprüfung durchzuführen.

Der Datenträger 1 ist, wie in der Fig. 7 gezeigt, vorzugsweise als ein Laminat 25 aus Kunststoffolien realisiert. Das Laminat 25 besteht aus einer Lackschicht 17, einer Reflexionsschicht 18 und einer Klebeschicht 26 und ist mit einer Trägerfolie 27 verbunden. Die Beugungsgitter sind als Reliefstruktur 20 in die Lackschicht 17 und die Reflexionsschicht 18 eingebettet.

Ein derartiger Datenträger 1 kann z.B. mittels eines Transferprozesses, bei dem die Trägerfolie 27 entfernt wird, auf einen Schlüssel aufgebracht und zur Codierung des Schlüssels verwendet werden. Das dem Schlüssel zugeordnete Schloss enthält ein Lesegerät der in der Fig. 1 dargestellten Art. Mit nur zwei Photodetektoren lässt sich der Code des Schlüssels beim Einführen in das Schloss selbsttätig lesen. Das Lesegerät kann auch mehr als zwei Photodetektoren aufweisen, so dass die Datendichte auf dem Schlüssel durch die Verwendung komplexerer Beugungsmuster 2 weiter erhöht werden kann. Weist sie beispielsweise zehn Photodetektoren auf, und weist jeder Schlüssel ein einziges Beugungsmuster auf, dann sind 2¹⁰ = 1024 verschiedene, kaum fälschbare Schlüssel herstellbar, die im Schloss statisch auslesbar sind. Dabei kann durch die Kombination der optischen Codierung mit der mechanischen Codierung des Schlüssels eine beliebig grosse Zahl verschiedener Schlüssel erzielt werden.

Bei Sicherheitsanwendungen ist es sinnvoll, die auf dem Datenträger 1 gespeicherten Beugungsmuster 2 auch örtlich zu korrelieren oder kryptografisch zu verschlüsseln, so dass die Bitfolge, die sich nach dem Lesen der Beugungsmuster 2 in ihrer auf dem Datenträger 1 entlang der Datenspur vorgegebenen Reihenfolge ergibt, erst nach entsprechender Weiterverarbeitung verständlich ist.

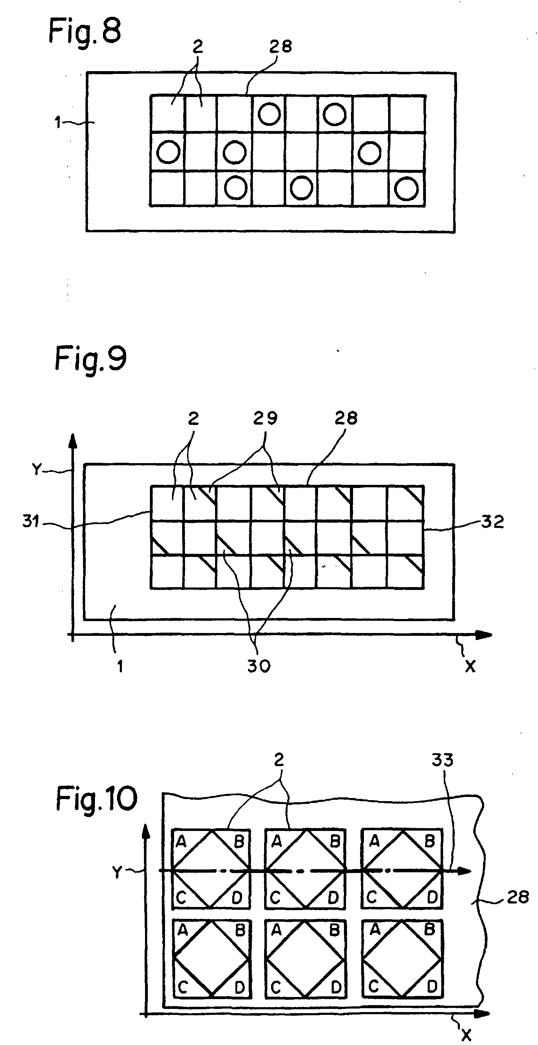

Die Fig. 8 zeigt einen Datenträger 1 mit einem optischen WORM Speicher 28. Der WORM Speicher 28 besteht aus Beugungsmustern 2, die in k Kolonnen und h Reihen matrixartig nebeneinander angeordnet sind. Jedes intakte Beugungsmuster 2 beugt den in vordefinierter Einfallsrichtung auftreffenden Lichtstrahl 10 als Teilstrahlen 11,12 (Fig. 1) in eine oder in mehrere spezifische Ausfallrichtungen. Die Ausfallrichtungen selbst sind vorgegeben und deren Zahl beträgt p. Damit sind sowohl Datenträger 1 verschiedenster Art als auch unterschiedliche Beugungsmuster 2 auf demselben Datenträger 1 mit einem universellen Lesegerät lesbar.

Beim Beispiel der Fig. 8 sind zwei Typen A und B von Beugungsmustern 2 vorgesehen, die in alternierender Reihenfolge ABAB... angeordnet sind. Jedes einzelne Beugungsmuster 2 erfüllt wenigstens zwei Funktionen: Zum einen stellt es ein codiertes Sicherheitselement in der Form einer Bitfolge aus p Bits dar, zum anderen stellt es eine Speicherzelle für ein einziges Bit mit dem binären Wert "1" oder, nach gezielter Veränderung, mit dem binären Wert "0" dar. Die Speicherkapazität des Worm Speichers 28 beträgt somit k*h Bits.

Im Lesemodus bestimmt das Lesegerät aus der Intensität der an einem einzelnen Beugungsmuster 2 gebeugten Teilstrahlen 11,12 eine Bitfolge mit p Bits. Die Bitfolge stellt eine codierte Information dar, die einerseits Angaben über den Typ A oder B des Beugungsmusters 2 und andererseits weitere Angaben, wie z.B. einen Ländercode, ein Ablaufdatum, etc. enthält. Der Speicherwert des Beugungsmusters 2 wird als Bit mit dem binären Wert "1" interpretiert, falls die Bitfolge einen gültigen Code darstellt. Falls die gelesene Bitfolge gleich der Bitfolge "00..0" ist, wird der Speicherwert des Beugungsmusters 2 als Bit mit dem binären Wert "0" interpretiert. Falls die Bitfolge einen ungültigen Code darstellt, jedoch als eine von der Bitfolge "00..0" unterschiedliche Bitfolge gelesen wurde, wird sie als ungültiges Zeichen angesehen, das weder als Bit "1" noch als Bit "0" interpretiert wird. Mit der Anzahl p der Richtungen nimmt die Komplexität des Beugungsmusters 2 und damit der Schwierigkeitsgrad zu, den Code in betrügerischer Absicht zu simulieren.

Die irreversible Veränderung des einzelnen Beugungsmusters 2 kann durch Zufuhr thermischer Energie erfolgen. Die Veränderung muss derart sein, dass das Beugungsmuster 2 die seinem Typ entsprechenden Teilstrahlen 11,12 nicht mehr oder nicht mehr in genügender Intensität zu erzeugen vermag, so dass das Lesegerät beim Lesen die Bitfolge "00..0" ermittelt. In der Fig. 8 sind einige Beugungsmuster 2 mit einem Kreis markiert, der das veränderte Gebiet innerhalb der vom Beugungsmuster 2 belegten Fläche markiert. Mit dem Laserstrahl eines mit einfachen Komponenten ausgerüsteten Lesegerätes sind Flächen von etwa fünfzig Mikrometern Durchmesser problemlos veränderbar, so dass die Bitdichte 40 kBit/cm² erreicht. Das Lesegerät ist mit Vorteil mit einem Laser ausgerüstet, der in einen Hochleistungsmodus zum Schreiben und einen Niedrigleistungsmodus zum Lesen schaltbar ist. Der Laserstrahl dient also sowohl zum Lesen der Bits wie auch zum Schreiben von Bits. Die Reflexionsschicht 18 (Fig. 5) ist mit Vorteil eine das Laserlicht stark absorbierende Metallschicht, damit der WORM Speicher 28 mit möglichst wenig Energie beschreibbar ist. Geeignete Metalle sind z.B. Cr, Te, etc. Mit Vorteil ist auch die beim Schreibvorgang vom Lichtstrahl 10 durchstrahlte Schicht 17 (Fig. 7) mit einem das Laserlicht absorbierenden Material dotiert, damit die zum Schreiben benötigte Wärmeenergie mit möglichst geringem Energieaufwand lieferbar ist.

Im einfachsten Fall ist das Beugungsmuster 2 ein Beugungsgitter mit einer symmetrischen oder asymmetrischen Profilform, die Licht vorwiegend in zwei bzw. eine einzige Richtung beugt. Durch die alternierende Anordnung von Beugungsmustern 2 wird das Lesen und Schreiben direkt aneinander angrenzender Speicherzellen vereinfacht, da das Lesegerät von unveränderten Beugungsmustern 2 immer wieder Informationen über die Grösse der Speicherzellen erhält. Falls jedoch die Beugungsmuster 2 identisch sind und direkt aneinander angrenzen, ist die Unterteilung des WORM Speichers 28 in Kolonnen und Reihen auf dem Datenträger 1 nur fiktiv. Dies hat zur Folge, dass z.B. das Lesegerät eingerichtet sein muss, beim Lesen entlang einer Datenspur den Wert jedes Bits aus dem zeitlichen Verlauf des von den Photodetektoren gelieferten Signals zu bestimmen. Folgen beispielsweise vier Bits mit dem Wert "1" aufeinander, dann liefern die entsprechend dem Code ansprechenden Photodetektoren für eine Zeitdauer von vier Zeiteinheiten ein hohes Signal, während bei einer Bitfolge "1101" zuerst während zwei Zeiteinheiten ein hohes Signal, dann während einer Zeiteinheit ein tiefes Signal und dann wieder während einer Zeiteinheit ein hohes Signal anliegen. Eine andere Möglichkeit besteht darin, zusätzlich zu den Datenspuren eine Taktspur vorzusehen, damit jedes Bit korrekt adressierbar ist.

Ein besonders lese- und manipulationssicherer WORM Speicher 28 ergibt sich, wenn immer je zwei Beugungsmuster 2 unterschiedlichen Typs eine Speicherzelle bilden. Die Speicherzelle stellt dann ein Bit mit dem Wert "1" dar, wenn das erste Beugungsmuster 2 unverändert und das zweite Beugungsmuster 2 verändert ist. Die Speicherzelle stellt ein Bit mit dem Wert "0" dar, wenn das erste Beugungsmuster 2 verändert und das zweite Beugungsmuster 2 unverändert ist. Sowohl ein Bit "1" als auch ein Bit "0" müssen geschrieben werden und eine Löschung des geschriebenen Bits ist nicht möglich. Die Speicherkapazität eines solchen WORM Speichers 28 beträgt h∗k/2. Eine andere Möglichkeit, Bits gegen unerlaubte Veränderungen zu schützen, besteht darin, einen drei aus fünf Code oder dergleichen zu verwenden, d.h. dass von fünf zusammengehörenden Beugungsmustern 2 immer drei verändert und zwei unverändert sind, damit die in den fünf Beugungsmustern 2 gespeicherte Information ein aus mehreren Bits bestehendes gültiges Zeichen darstellt.

Bei einer Weiterbildung, die in der Fig. 9 dargestellt ist, sind weitere ortsabhängige Beugungsstrukturen 29, 30 vorhanden, die Angaben über die x- bzw. y-Koordinate auf dem WORM Speicher 28 enthalten. Die Beugungsstrukturen 29, 30 können den Beugungsmustern 2 überlagert auf der ganzen Fläche des WORM Speichers 28 oder, wie in der Fig. 9 dargestellt, nur in ausgewählten Teilflächen vorhanden sein. Ein Beispiel für eine solche Beugungsstruktur 29 ist ein eindimensionales Beugungsgitter, dessen Linienzahl mit zunehmender x-Koordinate kontinuierlich zunimmt. Die Linienzahl einen Rand 31 des WORM Speichers 28 beträgt z.B. 300 Linien/mm, am entgegengesetzten Rand 32 beträgt sie 1500 Linien/mm. Da der Beugungswinkel eines monochromatischen Lesestrahles, der auf das Beugungsgitter 29 fällt, von der Linienzahl abhängt, ist die entsprechende Koordinate mittels eines im Lesegerät angeordneten positionsempfindlichen Photodetektors bestimmbar. Die Beugungsstrukturen 29, 30 sind orthogonal zueinander angeordnet. Solche Beugungsstrukturen 29, 30, die Informationen über den Ort auf dem Datenträger 1 enthalten, erlauben die Verwendung von Lesegeräten, die ohne eine eigene, hochgenaue Positionierungseinrichtung auskommen, da die Adresse für jedes einzelne oder beispielsweise jedes zehnte Bit vom Datenträger 1 ablesbar ist. Die für die Adressbestimmung nötigen Beugungsstrukturen 29, 30 sind derart ausgebildet, dass sie Licht in eine andere Richtung streuen als die Beugungsmuster 2.

Solche zusätzlichen Beugungsstrukturen können eine Vielzahl von möglichen Funktionen übernehmen. Beispielsweise können sie Informationen enthalten über die Funktion der Beugungsmuster 2, so dass gewisse Beugungsmuster 2 z.B. einen ROM Speicher bilden. Sie können auch Formatangaben enthalten.

Die Fig. 10 zeigt den WORM Speicher 28 mit als Speicherzelle dienenden Beugungsmustern 2, die wenigstens vier Teilflächen umfassen. Jede der mit A, B, C und D bezeichneten Teilflächen weist zusätzlich zu den bereits beschriebenen Beugungsstrukturen weitere Beugungsstrukturen auf, die Informationen zur Führung des Lichtstrahles 10 (Fig. 1) entlang einer Spur 33 enthalten. Das Lesegerät enthält zwei Photodetektoren, deren analoge Signalstärken ein Mass für die Abweichung von der Spur 33 in x- bzw. y- Richtung sind. Die Teilfläche A beugt Licht auf den ersten und auf den zweiten Photodetektor. Die Teilfläche B beugt Licht auf den ersten Photodetektor und kein Licht auf den zweiten Photodetektor. Die Teilfläche C beugt Licht auf den zweiten Photodetektor und kein Licht auf den ersten Photodetektor. Die Teilfläche D beugt kein Licht auf die beiden Photodetektoren. Weicht der entlang der Spur 33 zu führende Lichtstrahl 10 von der idealen Linie ab, dann nehmen entsprechend der Abweichung beispielsweise die für die Beugungsmuster 2 vom Typ A und B charakteristischen Signale zu, während die für die Beugungsmuster 2 vom Typ C und D charakteristischen Signale abnehmen. Das Lesegerät ist eingerichtet, die Signale dieser Photodetektoren zur Spurführung des Lichtstrahles 10 zu verwenden.

Die anhand der Fig. 8 - 10 beschriebenen Beispiele stellen nur eine beschränkte Auswahl von vielen möglichen Arten dar, die gewünschten Funktionen Speicherung, Adressierung, Sicherheit und Spurführung zu realisieren. Die Beispiele lassen sich beliebig kombinieren und verändern. Zusammenfassend kann man sagen, dass jede Speicherzelle mit einem Beugungsmuster 2 den Lichtstrahl 10 in vorbestimmte Ausfallrichtungen beugt. Aus den Intensitäten des in die Ausfallrichtungen gebeugten Lichtes lässt sich eine Bitfolge bestimmen. Einige Bits der Bitfolge sind für jede unveränderte Speicherzelle des Datenträgers 1 identisch; sie stellen ein Sicherheitsmerkmal dar. Weitere Bits der Bitfolge enthalten vorbestimmte Informationen wie z.B. Funktions- oder Formatangaben, die für verschiedene Speicherzellen unterschiedlich sind. Weitere Bits der Bitfolge werden als analoge oder digitale Signale zur Spurführung und/oder Adressierung verwendet. Jede Speicherzelle kann andererseits nur einen einzigen Binärwert speichern. Die Verwendung von Reliefstrukturen mit einer asymmetrischen Profilform, die bei Beleuchtung mit dem Lichtstrahl 10 zwei Teilstrahlen 11, 12 (Fig. 1) mit einem vorbestimmten Intensitätsverhältnis erzeugt, erlaubt zudem eine Echtheitsprüfung des Datenträgers 1 aufgrund schwer nachzumachender physikalischer Merkmale der Beugungsmuster 2.

## Patentansprüche

1. Optischer Datenträger (1) mit zwischen Kunststoffschichten (17, 19; 17, 26) eingebetteten und mit einer Reflexionsschicht (18) überzogenen Reliefstrukturen (20), die als lokal und irreversibel veränderbare, optisch wirksame Beugungselemente (15) nebeneinander angeordnet Beugungsmuster (2) mit einem Bitmuster von n Bits darstellen und einen Satz von m verschiedenen Typen von Beugungsmustem (2) bilden, die in definierter Einfallsrichtung auf jeweils eines der Beugungsmuster (2) einfallende Lichtstrahlen (10) als Teilstrahlen (11, 12) in höchstens n vorbestimmte Ausfallrichtungen beugen, wobei die Intensität jedes Teilstrahls (11; 12) den Wert des oder der entsprechenden Bits im Bitmuster bestimmt und die Zahl n kleiner als die Zahl m ist,
**dadurch gekennzeichnet,**
**dass** verschiedene, aus dem Satz der m Beugungsmuster (2) ausgewählte Beugungsmuster (2) in periodischer Reihenfolge entlang mindestens einer Datenspur (21; 33) angeordnet sind,
**dass** die Beugungselemente (15) des Beugungsmusters (2) in unveränderter Form als maschinell lesbares Bitmuster eines Sicherheitsmerkmals dienen, dass das unveränderte Beugungsmuster (2) einen ersten binären Speicherwert ("1") darstellt,
**dass** ein Einschreiben von Nutzinformationen durch irreversibles Verändern der vorbestimmten Beugungselemente (15) derart erfolgt, dass das vorbestimmt veränderte Beugungsmuster (2) den komplementären binären Speicherwert ("0'') darstellt, und dass die Bitmuster, die sich vom Sicherheitsmerkmal und vom Bitmuster für den komplementären binären Speicherwert ("0") unterscheiden, ungültige Zeichen sind.

2. Optischer Datenträger (1) nach Anspruch 1,
**dadurch gekennzeichnet,**
**dass** zwei verschiedene Beugungsmuster (2) auf der Datenspur (21; 33) in alternierender Reihenfolge angeordnet sind, das die einen Beugungsmuster (2) als Taktbereiche (T) ein Feld (22) mit einem Beugungsgitter (15a; 15b) mit einem symmetrischen Profil zur Erzeugung eines Taktsignals enthalten, dass die anderen Beugungsmuster (2) Informationsbereiche (B) zur Beschreibung mit Nutzinformation darstellen und dass die Informationsbereiche (B) in wenigstens einem ersten Feld (23) ein Beugungsgitter (15c) mit einem asymmetrischen Profil erster Art und in wenigstens einem zweiten Feld (24) ein Beugungsgitter (15d) mit einem asymmetrischen Profil zweiter Art enthält, dass Linienabstand und Orientierung der Beugungsgitter (15) vorbestimmt sind und dass nach dem Einschreiben eines einzelnen Bits der Nutzinformation im Informationsbereich (B) entweder alle Beugungsgitter (15c) mit dem asymmetrischen Profil erster Art oder alle Beugungsgitter (15d) mit dem asymmetrischen Profil zweiter Art verändert sind.

3. Optischer Datenträger (1) nach Anspruch 2,
**dadurch gekennzeichnet,**
**dass** in den Feldern (22; 23; 24) die Beugungsgitter (15b) mit symmetrischem Profil, die Beugungsgitter (15c) mit dem asymmetrischen Profil erster Art und die Beugungsgitter (15d) mit dem asymmetrischen Profil zweiter Art in den Takt- und Informationsbereichen (T; B) gleichen Linienabstand und gleiche Orientierung aufweisen.

4. Optischer Datenträger (1) nach Anspruch 1,
**dadurch gekennzeichnet,**
**dass** wenigstens zwei Beugungsmuster (2) unterschiedlichen Typs gemeinsam eine Speicherzelle für ein einzelnes Bit oder ein aus mehreren Bits bestehendes Zeichen der Nutzinformation bilden und dass in jeder Speicherzelle eines der Beugungsmuster (2) unverändert bleibt, wenn das andere Beugungsmuster (2) nach dem Beschreiben mit der Nutzinformation eine vorbestimmte Anzahl von veränderten Beugungselementen (15) aufweist, wobei ein verändertes erstes Beugungsmuster (2) den Wert "1" und ein verändertes zweites Beugungsmuster (2) den Wert "0" darstellt.

5. Optischer Datenträger (1 ) nach Anspruch 1,
**dadurch gekennzeichnet,**
**dass** fünf Beugungsmuster (2) unterschiedlichen Typs gemeinsam eine Speicherzelle für ein aus mehreren Bits bestehendes Zeichen der Nutzinformation bilden und dass die Nutzinformation im 3 aus 5 Code dargestellt ist, wobei von den fünf Beugungsmustem (2) der Speicherzelle jeweils drei verändert und zwei unverändert sind, wobei ein unverändertes Beugungsmuster (2) den Wert "1" und ein verändertes Beugungsmuster (2) den Wert "0" darstellt.

6. Optischer Datenträger (1) nach Anspruch 1,
**dadurch gekennzeichnet,**
**dass** jedes Beugungsmuster (2) eine Speicherzelle für ein einzelnes Bit der Nutzinformation bildet und ein codiertes Sicherheitsmerkmal in der Form des Bitmusters aus einer vorbestimmten Anzahl (p) der Beugungselemente (15) mit Angaben über den Typ des Beugungsmusters (2) enthält und dass das unveränderte Beugungsmuster (2) einen ersten binären Wert ("1") und das vorbestimmt veränderte Beugungsmuster (2) den komplementären binären Wert ("0") darstellt.

7. Optischer Datenträger (1) nach einem der Ansprüche 1 bis 6,
**dadurch gekennzeichnet,**
**dass** die Beugungsmuster (2) matrixartig in Kolonnen und in Reihen nebeneinander angeordnet sind und Speicherzellen eines optischen WORM Speichers (28) bilden.

8. Optischer Datenträger (1) nach Anspruch 7,
**dadurch gekennzeichnet,**
**dass** jedes Beugungsmuster (2) weitere ortsabhängige Beugungsstrukturen (29; 30) aufweisen, die Angaben über die Koordinaten x und y des Beugungsmusters (2) auf dem WORM Speicher (28) enthalten.

9. Optischer Datenträger (1) nach Anspruch 1 bis 8,
**dadurch gekennzeichnet,**
**dass** die als Speicherzellen dienenden Beugungsmuster (2) wenigstens vier Teilflächen (A; B; C; D) mit weiteren Beugungsstrukturen umfassen und dass die Teilflächen (A; B; C; D) Informationen enthalten, die der Spurführung eines Lichtstrahls (10) entlang der Datenspur (21; 33) dienen.

10. Optischer Datenträger (1) nach einem der Ansprüche 1 bis 9,
**dadurch gekennzeichnet,**
**dass** zum irreversiblen Verändern der Beugungselemente (15) die Reliefstrukturen (20) durch lokale Zufuhr thermischer Energie an der erwärmten Stelle veränderbar sind.

11. Optischer Datenträger (1) nach einem der Ansprüche 1 bis 9,
**dadurch gekennzeichnet,**
**dass** die entsprechend dem darzustellenden Bitmuster zum Verändern vorgesehenen Beugungselemente (15) durch lokales Abtragen der Reflexionsschicht (18) unter Verwendung eines Laserstrahls veränderbar sind.

12. Optischer Datenträger (1) nach Anspruch 11,
**dadurch gekennzeichnet,**
**dass** die Reflexionsschicht (18) aus einer Laserlicht stark absorbierenden Metallschicht besteht.

13. Optischer Datenträger (1) nach Anspruch 12,
**dadurch gekennzeichnet,**
**dass** das Laserlicht stark absorbierende Metall Chrom oder Tellur ist.

14. Optischer Datenträger (1) nach einem der Ansprüche 11 bis 13,
**dadurch gekennzeichnet,**
**dass** die vom Lichtstrahl durchstrahlte Lackschicht (17) der Kunststoffschichten (17, 19; 17,26) mit einem Laserlicht absorbierenden Material dotiert ist.

15. Optischer Datenträger (1 ) nach einem der Ansprüche 1 bis 14,
**dadurch gekennzeichnet,**
**dass** die Kunststoffschichten (17,19) mit den Reliefstrukturen (20) der Beugungsmuster (2) auf einem scheibenförmigen Substrat (16) angeordnet sind und eine beschreibbare Compact Disk bilden.

16. System bestehend aus Datenträger (1) nach einem der Ansprüche 1 bis 15 und Schreib-/Lesegerät, zum Lesen und Schreiben eines solchen Datenträgers (1), wobei das Lesegerät eine Transporteinrichtung (8) für den Datenträger (1), einen optischen Lesekopf (3) mit einer Lichtquelle (4) zur Erzeugung eines in vorbestimmter Richtung auf das Beugungsmuster (2) einfallenden Lichtstrahls (10), eine Anordnung von Photodetektoren (6; 6.1 bis 6.12). die den durch die Beugungselemente (15) vorbestimmten Ausfallrichtungen zugeordnet sind und die gebeugten Teilstrahlen (11; 12) detektieren, sowie eine Steuer- und Auswerteschaltung (9) zur Analyse der von den Photodetektoren (6; 6.1 bis 6.12) abgegebenen Signale für den Wert jedes Bits des Bitmusters bzw. der Nutzinformation umfasst,
**dadurch gekennzeichnet,**
**dass** das Lesegerät mit einem Laser als Lichtquelle (4) ausgerüstet ist, dass beim Lesen des Datenträgers (1) der Laser in einen Niedrigleistungsmodus geschaltet ist und der Lichtstrahl (10) entlang der Datenspur (21; 33) ein Beugungsmuster (2) nach dem ändern beleuchtet, und dass beim Schreiben der Bits der Laser in einen Hochleistungsmodus geschaltet ist, wobei das Schreiben eines beliebigen Bitmusters im Beugungsmuster (2) durch irreversibles Verändern einzelner Beugungselemente (15) mittels des Laserstrahls erfolgt.

17. System nach Anspruch 16,
**dadurch gekennzeichnet,**
**dass** unter lokaler Wärmeeinwirkung das Einschreiben von Daten durch das irreversible Verändern der Reliefstruktur (20) des Beugungselementes (15) erfolgt.

18. System nach Anspruch 16,
**dadurch gekennzeichnet,**
**dass** das irreversible Verändern des Beugungselementes (15) zum Einschreiben von Daten durch ein lokales Abtragen der Reflexionsschicht (18) erfolgt.

## Claims

1. Optical data storage medium (1) with relief structures (20), which are embedded between plastic layers (17, 19; 17, 26), are coated with a reflection layer (18) representing, as locally and irreversibly variable, optically effective diffraction elements (15), diffraction patterns (2) which are arranged alongside one another with a bit pattern of n bits, and form a set of m other different types of diffraction patterns (2), which diffract light beams (10) which are incident in a defined incidence direction onto in each case one of the diffraction patterns (2) as beam elements (11, 12) into at most n predetermined emission directions, with the intensity of each beam element (11; 12) determining the value of the corresponding bit or bits in the bit pattern, and the number n being less than the number m,
**characterized**
**in that** various diffraction patterns (2) which are selected from the set of m diffraction patterns (2) are arranged in periodic sequence along at least one data track (21; 33),
**in that** the diffraction elements (15) of the diffraction pattern (2) are used in unchanged form as machine-measurable bit patterns for a security feature,
**in that** the unchanged diffraction pattern (2) represents a first binary stored value ("1"),
**in that** useful information is written by irreversibly changing the predetermined diffraction elements (15) such that the diffraction pattern (2) which has been changed in a predetermined manner represents the complementary binary stored value ("0"), and such that the bit patterns which differ from the security feature and from the bit pattern for the complementary binary stored value ("0") are invalid characters.

2. Optical data storage medium (1) according to Claim 1,
**characterized**
**in that** two different diffraction patterns (2) are arranged in an alternating sequence on the data track (21; 33), such that one diffraction pattern (2) contains as clock areas (T) a field (22) with a diffraction grating (15a; 15b) with a symmetrical profile in order to produce a clock signal, in that the other diffraction pattern (2) represents information areas (B) for writing useful information to, and in that the information areas (B) in at least one first field (23) contain a diffraction grating (15c) with an asymmetric profile of a first type, and those in at least one second field (24) contain a diffraction grating (15d) with an asymmetric profile of a second type, in that the line separation and orientation of the diffraction gratings (15) is predetermined, and in that, once an individual bit of the useful information has been written in the information area (B), either all the diffraction gratings (15c) with the asymmetric profile of the first type are changed, or all the diffraction gratings (15d) with the asymmetric profile of the second type are changed.

3. Optical data storage medium (1) according to Claim 2,
**characterized**
**in that** the diffraction gratings (15b) with the symmetrical profile, the diffraction gratings (15c) with the asymmetric profile of the first type, and the diffraction gratings (15d) with the asymmetric profile of the second type in the fields (22; 23; 24) have the same line separation and the same orientation in the clock and information areas (T; B).

4. Optical data storage medium (1) according to Claim 1,
**characterized**
**in that** at least two diffraction patterns (2) of different types jointly form one memory cell for a single bit or for a character of useful information formed from two or more bits, and in that one of the diffraction patterns (2) in each memory cell remains unchanged when the other diffraction pattern (2) has a predetermined number of changed diffraction elements (15) after the useful information has been written to it, with a changed first diffraction pattern (2) representing the value "1", and a changed second diffraction pattern (2) representing the value "0".

5. Optical data storage medium (1) according to Claim 1,
**characterized**
**in that** five diffraction patterns (2) of different types jointly form one memory cell for a character of the useful information which is formed from two or more bits, and in that the useful information is represented in the 3 from 5 code, with three of the five diffraction patterns (2) in the memory cell in each case being changed, and two of them not being changed, and with an unchanged diffraction pattern (2) representing the value "1", and a changed diffraction pattern (2) representing the value "0".

6. Optical data storage medium (1) according to Claim 2,
**characterized**
**in that** each diffraction pattern (2) forms a memory cell for a single bit of useful information, and it contains a coded security feature in the form of the bit pattern formed from a predetermined number (p) of the diffraction elements (15) with details about the type of the diffraction pattern (2), and in that the unchanged diffraction pattern (2) represents a first binary value ("1"), and the diffraction pattern (2) which is changed in a predetermined manner represents the complementary binary value ("0").

7. Optical data storage medium (1) according to one of Claims 1 to 6,
**characterized**
**in that** the diffraction patterns (2) are arranged next to one another in the form of a matrix in columns and in rows, and form memory cells for an optical, WORM memory (28).

8. Optical data storage medium (1) according to Claim 7,
**characterized**
**in that** the diffraction patterns (2) each have further position-dependent diffraction structures (29; 30), which contain details about the coordinates x and y of the diffraction pattern (2) on the WORM memory (28).

9. Optical data storage medium (1) according to Claim 1 to 8,
**characterized**
**in that** the diffraction patterns (2) which are used as memory cells have at least four area elements (A; B; C; D) with further diffraction structures, and in that the area elements (A; B; C; D) contain information which is used for tracking of a light beam (10) along the data track (21; 33).

10. Optical data storage medium (1) according to one of Claims 1 to 9,
**characterized**
**in that** the relief structures (20) can be changed by irreversibly changing the diffraction elements (15), by supplying thermal energy locally to the heated point.

11. Optical data storage medium (1) according to one of Claims 1 to 9,
**characterized**
**in that** the diffraction elements (15) which are intended to be changed in accordance with the bit pattern to be represented can be changed by local removal of the refraction layer (18) using a laser beam.

12. Optical data storage medium (1) according to Claim 11,
**characterized**
**in that** the reflection layer (18) is in the form of a metal layer which is highly absorbent to laser light.

13. Optical data storage medium (1) according to Claim 12,
**characterized**
**in that** the metal which is highly absorbent to laser light is chromium or tellurium.

14. Optical data storage medium (1) according to one of Claims 11 to 13,
**characterized**
**in that** the varnish layer (17), through which the light beam passes, on the plastic layers (17, 19; 17, 26) is doped with a material which absorbs laser light.

15. Optical data storage medium (1) according to one of Claims 1 to 14,
**characterized**
**in that** the plastic layers (17, 19) are arranged together with the relief structures (20) for the diffraction patterns (2) on a substrate (16) in the form of a disc, and form a writeable compact disc.

16. System comprising a data storage medium (1) according to one of Claims 1 to 15 and a writer/reader, for reading and writing to such a data storage medium (1), with the reader having a transport device (8) for the data storage medium (1), having an optical read head (3) with a light source (4) for producing a light beam (10) which strikes the diffraction pattern (2) in a predetermined direction, having an arrangement of photodetectors (6; 6.1 to 6.12) which are associated with the predetermined emission directions of the diffraction elements (15) and detect the diffracted beam elements (11; 12), and having a control and evaluation circuit (9) for analysis of the signals which are emitted in the photodetectors (6; 6.1 to 6.12) [lacuna] for the value of each bit in the bit pattern and in the useful information,
**characterized**
**in that** reader is equipped with a laser as the light source (4), in that the laser is switched to a low-power mode when reading from the data storage medium (1) and the light beam (10) illuminates one diffraction pattern (2) after the other along the data track (21; 33), and in that the laser is switched to a high-power mode when writing the bits, in which case any desired bit pattern in the diffraction pattern (2) can be written by irreversibly changing individual diffraction elements (15) by means of the laser beam.

17. System according to Claim 16,
**characterized**
**in that** data is written under the local influence of heat by irreversibly changing the relief structure (20) of the diffraction element (15).

18. System according to Claim 16,
**characterized**
**in that** the diffraction element (15) is changed irreversibly for writing data by local removal of the reflection layer (18).

## Revendications

1. Support de données optique (1) avec des structures en relief (20) insérées entre des couches de matière plastique (17, 19 ; 17, 26) et recouvertes d'une couche de réflexion (18), qui constituent, en tant qu'éléments de diffraction (15) locaux, optiquement actifs, et modifiables de manière irréversible, disposés les uns à côté des autres, un motif de diffraction (2) avec un motif de n bits et un ensemble de m types différents de motifs de diffraction (2) qui diffractent les rayons lumineux (10) arrivant avec une certaine incidence sur un des motifs de diffraction (2) en rayons partiels (11, 12) dans maximum n directions de sortie prédéterminées, moyennant quoi l'intensité de chaque rayon partiel (11 ; 12) détermine la valeur du ou des bits correspondants dans le motif binaires et le nombre n est inférieur au nombre m, **caractérisé en ce que** différents motifs de diffraction (2) sélectionnés parmi l'ensemble des m motifs de diffraction (2), sont disposés en une série périodique le long d'au moins une piste de données (21 ; 33), **en ce que** les éléments de diffraction (15) du motif de diffraction (2) servent, dans leur forme inchangée, de motif binaire, lisible à l'aide d'une machine, d'une identification de sécurité, **en ce que** le motif de diffraction (2) inchangé constitue une première valeur de mémoire binaire (« 1 »), **en ce que** l'écriture d'informations utiles est réalisée par la modification irréversible des éléments de diffraction (15) prédéterminés, de telle sorte que le motif de diffraction (2) modifié de manière déterminé constitue la valeur de mémoire binaire complémentaire (« 0 ») et **en ce que** les motifs binaires, qui se différencient de l'identification de sécurité et du motif binaire de la valeur de mémoire binaire complémentaire (« 0 »), sont des signes non valables.

2. Support de données optique (1) selon la revendication 1, **caractérisé en ce que** deux motifs de diffraction différents (2) sur la piste de données (21 ; 33) sont disposés en séries alternantes, **en ce que** des motifs de diffraction (2), constitués de zones cycliques (T), comprennent un champ (22) avec une grille de diffraction (15a ; 15b) avec un profil symétrique afin de générer un signal cyclique, **en ce que** les autres motifs de diffraction (2) constituent des zones d'informations (B) dans lesquelles des informations utiles peuvent être inscrites et **en ce que** les zones d'informations (B) comprennent, dans au moins un premier champ (23), une grille de diffraction (15c) avec un profil asymétrique du premier type et, dans au moins un deuxième champ (24), une grille de diffraction (15d) avec un profil asymétrique du deuxième type, **en ce que** l'intervalle entre les lignes et l'orientation des grilles de diffraction (15) sont prédéterminés et **en ce que**, après l'écriture d'un seul bits des informations utiles de la zone d'informations (B), soit toutes les grilles de diffraction (15c) avec le profil asymétrique du premier type, soit toutes les grilles de diffraction (15d) avec le profil asymétrique du deuxième type sont modifiées.

3. Support de données optique (1) selon la revendication 2, **caractérisé en ce que**, dans les champs (22 ; 23 ; 24), les grilles de diffraction (15b) avec un profil symétrique, les grilles de diffraction (15c) avec le profil asymétrique du premier type et les grilles de diffraction (15d) avec le profil asymétrique du deuxième type ont, dans les zones cycliques et les zones d'informations (T ; B) le même intervalle entre les lignes et la même orientation.

4. Support de données optique selon la revendication 1, **caractérisé en ce qu'**au moins deux motifs de diffraction (2) de types différents constituent un emplacement de mémoire pour un seul bit ou pour un signe constitué de plusieurs bits d'information utile, et **en ce que**, dans chaque emplacement de mémoire, un des motifs de diffraction (2) reste inchangé lorsque l'autre motif de diffraction (2), après l'inscription de l'information utile, comporte un nombre prédéterminé d'éléments de diffraction (15) modifiés, moyennant quoi un premier motif de diffraction (2) modifié représente la valeur « 1 » et un deuxième motif de diffraction (2) modifié représente la valeur « 0 ».

5. Support de données optique (1) selon la revendication 1, **caractérisé en ce que** cinq motifs de diffraction (2) de types différents constituent ensemble un emplacement mémoire pour un signe constitué de plusieurs bits d'information utile et **en ce que** l'information utile est représenté en code 3 de 5, moyennant quoi, des cinq motifs de diffraction (2) de l'emplacement de mémoire, trois sont modifiés et deux sont inchangés, moyennant quoi un motif de diffraction (2) inchangé représente la valeur « 1 » et un motif de diffraction (2) modifié représente la valeur « 0 ».

6. Support de données optique (1) selon la revendication 1, **caractérisé en ce que** chaque motif de diffraction (2) contient un emplacement mémoire pour un seul bit de l'information utile et une identification de sécurité codée sous la forme du motif binaire constitué d'un nombre (p) prédéterminé d'éléments de diffraction (15) avec des indications sur le type de motif de diffraction (2) et **en ce que** le motif de diffraction (2) inchangé représente un première valeur binaire (« 1) et le motif de diffraction (2) modifié de manière prédéterminée représente la valeur binaire (« 0 ») .

7. Support de données optique (1) selon l'une des revendications 1 à 6, **caractérisé en ce que** les motifs de diffraction (2) sont disposés de manière matricielle en colonnes et en lignes les uns à côté des autres et constituent les emplacements d'une mémoire WORM optique (28) .

8. Support de données optique (1) selon la revendication 7, **caractérisé en ce que** chaque motif de diffraction (2) comporte d'autres structures de diffraction (29 ; 30) dépendant de l'endroit, qui contiennent des indications sur les coordonnées x et y du motif de diffraction (2) sur la mémoire WORM (28).

9. Support de données optique (1) selon l'une des revendications 1 à 8, **caractérisé en ce que** les motifs de diffraction (2) servant d'emplacements mémoire comprennent au moins quatre surfaces partielles (A ; B ; C ; D) avec d'autres structures de diffraction et **en ce que** les surfaces partielles (A ; B ; C ; D) contiennent des informations qui servent au guidage d'un rayon lumineux (10) le long de la piste de données (21 ; 33).

10. Support de données optique (1) selon l'une des revendications 1 à 9, **caractérisé en ce que**, pour la modification irréversible des éléments de diffraction (15), les structures en relief (20) peuvent être modifiées par un apport local d'énergie thermique à un endroit déterminé.

11. Support de données optique (1) selon l'une des revendications 1 à 9, **caractérisé en ce que** les éléments de diffraction (15), destinés à être modifiés selon le motif binaire à représenter par enlèvement local de la couche de réflexion (18), peuvent être modifiés à l'aide d'un rayon laser.

12. Support de données optique (1) selon la revendication 11, **caractérisé en ce que** la couche de réflexion (18) est constituée d'une couche métallique absorbant fortement la lumière laser.

13. Support de données optique (1) selon la revendication 12, **caractérisé en ce que** le métal absorbant fortement la lumière laser est du chrome ou du tellure.

14. Support de données optique (1) selon l'une des revendications 11 à 13, **caractérisé en ce que** la couche de vernis (17) des couches de matière plastique (17, 19 ; 17, 26), traversée par le rayon lumineux, est doté d'un matériau absorbant la lumière laser.

15. Support de données optique (1) selon l'une des revendications 1 à 14, **caractérisé en ce que** les couches de matière plastique (17, 19) comportant les structures en relief (20) des motifs de diffraction (2) sont disposées sur un substrat (16) en forme de disque et constituent un disque compact inscriptible.

16. Système constitué de supports de données (1) selon l'une des revendications 1 à 15 et appareil de lecture/écriture pour la lecture et l'écriture d'un tel support de données (1), moyennant quoi l'appareil de lecture comprend un dispositif de transport (8) pour le support de données (1), une tête de lecture (3) avec une source lumineuse (4) pour générer un rayon lumineux (10) arrivant avec un certain angle d'incidence sur le motif de diffraction (2), un ensemble de photodétecteurs (6 ; 6.1 à 6.12) qui correspondent aux directions de sortie prédéterminées par les éléments de diffraction (15) et qui détectent les rayons partiels diffractés (11 ; 12) ainsi qu'un circuit de commande et d'analyse (9) afin d'analyser les signaux générés par les photodétecteurs (6 ; 6.1 à 6.12) qui représentent la valeur de chaque bit du motif binaire ou de l'information utile, **caractérisé en ce que** l'appareil de lecture est muni d'un laser servant de source lumineuse (4), **en ce que**, lors de la lecture du support de données (1), le laser est commuté dans un mode de faible puissance et le rayon lumineux (10) éclaire, le long de la piste de données (21 ; 33) un motif de diffraction (2) après l'autre, et **en ce que**, lors de l'écriture des bits, le laser est commuté dans un mode de forte puissance, moyennant quoi l'écriture d'un motif binaire quelconque dans le motif de diffraction (2) est réalisée par modification irréversible de certains éléments de diffraction (15) à l'aide du rayon laser.

17. Système selon la revendication 16, **caractérisé en ce que** l'écriture de données est réalisée grâce à l'action locale de la chaleur du fait de la modification irréversible de la structure en relief (20) de l'élément de diffraction (15).

18. Système selon la revendication 16, **caractérisé en ce que** la modification irréversible de l'élément de diffraction (15) est réalisée pour l'écriture de données grâce à un enlèvement local de la couche de réflexion (18).
